# EUROPÄISCHE PATENTSCHRIFT

(11) **EP 0 788 326 B1**
(45) Veröffentlichungstag und Bekanntmachung des Hinweises auf die Patenterteilung: **29.07.1998**
(21) Anmeldenummer: 96900300.3
(22) Anmeldetag: 04.01.1996
(51) Int. Cl.: A47J 27/022, A47J 27/00

(54) **INDUKTIONSHERDGEEIGNETES KOCHGEFÄSS**
COOKING VESSEL SUITABLE FOR AN INDUCTION STOVE
USTENSILE DE CUISSON ADAPTE AUX TABLES DE CUISSON A INDUCTION

(30) Priorität: 05.01.1995 DE 19500250
(43) Veröffentlichungstag der Anmeldung: 13.08.1997
(73) Patentinhaber: WMF WÜRTTEMBERGISCHE METALLWARENFABRIK AG, 73309 Geislingen/Steige (DE)
(72) Erfinder: WEND, Eike-Fritz, D-73033 Göppingen (DE); PAULUS, Max, D-73312 Geislingen (DE); KREJZA, Jürgen, D-73329 Kuchen (DE); SCHIER, Roland, D-73092 Heiningen (DE); SPRINGER, Hans-Jürgen, D-89173 Lonsee (DE); FISCHBACH, Stefan, D-73312 Geislingen (DE)
(74) Vertreter: Grünecker, Kinkeldey, Stockmair & Schwanhäusser Anwaltssozietät
(86) Internationale Anmeldenummer: EP9600025
(87) Internationale Veröffentlichungsnummer: WO9620629

(56) Entgegenhaltungen:
- EP-A- 0 221 848
- DE-A- 3 639 013
- DE-A- 3 716 966
- DE-A- 3 800 745
- DE-C- 4 134 740
- DE-U- 9 320 248

## Beschreibung

Die Erfindung bezieht sich auf ein induktionsherdgeeignetes Kochgefäß der im Oberbegriff von Anspruch 1 erläuterten Art.

Ein derartiges Kochgefäß ist aus der EP-A-221 848 bekannt. Das bekannte Kochgefäß besteht aus einem Gefäßkörper aus rostbeständigem Stahl, einer Wärmeverteilplatte und einer die Wärmeverteilplatte überdeckenden und diese gegen Korrosion schützenden Bodenkapsel. Die Bodenkapsel ist bevorzugt dreilagig, kann jedoch auch zweilagig ausgebildet sein und enthält eine durch Induktion erwärmbare Schicht aus einem ferromagnetischen Material, wie beispielsweise Eisen, und wenigstens eine Schicht aus einem rostbeständigem Material. In der zweilagigen Ausbildung der Bodenkapsel ist diese Schicht an der Außenseite angeordnet und schützt die induktionserwärmbare Schicht und die Wärmeverteilplatte gegen Korrosion. In der dreilagigen Ausbildung der Bodenkapsel ist jeweils eine Schicht aus rostbeständigem Material beidseitig der Schicht aus dem ferromagnetischen Material angeordnet. Es wird jedoch ausdrücklich darauf hingewiesen, daß die Schichten aus dem weiteren, rostbeständigen Material, und zwar sowohl in Innen-als auch in Außenanordnung, sehr dünn, d.h. unter 0,2 mm, sein müssen. Das Problem des Ausgleichs unterschiedlicher Wärmedehnungen wird nicht angesprochen.

Ein induktionsherdgeeignetes Kochgefäß ist auch aus der DE-OS 36 39 031 bekannt. Das bekannte Kochgefäß besteht aus einem Gefäßkörper aus rostbeständigem Stahl, insbesondere einem austenitischen Chrom-Nickel-Stahl, einer vergleichsweise dicken Wärmeverteilplatte aus einem gut wärmeleitendem Material, wie beispielsweise Aluminium oder dgl., und einer die nach unten weisenden Außenseite der Wärmeverteilplatte schützend abdeckenden Bodenplatte aus einem nicht rostenden, austenitischen Chrom-Nickel-Stahl. Die in Richtung der Induktionsquelle weisende Unterseite dieser Bodenplatte ist mit einer folienartig dünnen Schicht aus einem magnetisierbaren Material, insbesondere einem Chrom-Stahl, bedeckt, die die Ankoppelung an die Induktionsquelle bewirkt. Die folienartige Schicht kann aufgewalzt, aufgelötet, durch Schlagpressen aufgeschlagen oder im Flammspritzverfahren aufgebracht sein. Ihre Dicke liegt jedoch nur bei 0,1 mm und darf 0,15 mm nicht übersteigen, da nach Aussagen in dieser Druckschrift ansonsten durch die unterschiedlichen Ausdehnungskoeffizienten der Bodenplatte und der induktionserwärmbaren Schicht eine übermäßige Verformung des Kochgefäßbodens stattfindet, die die Toleranzgrenzen der diesbezüglichen DIN 44 904 übersteigt, so daß das Kochgefäß nicht mehr zu Verwendung auf Elektroplatten geeignet ist. Eine derartig dünne Schicht wird jedoch leicht über ihre gesamte Dicke zerkratzt, beispielsweise wenn ein gefülltes Kochgefäß über einen schadhaften Untersetzer mit harten Kanten gezogen wird, und kann dann ihre Funktion nicht oder nur noch unvollständig erfüllen.

Ein weiteres Kochgefäß der obengenannten Art ist aus der DE-OS 36 34 841 bekannt. Bei diesem Kochgefäß ist die induktionserwärmbare Schicht etwas dicker (etwa 0,4 mm oder größer) und ist zwischen zwei dünneren Schichten (bis etwa 0,2 mm) eines rostbeständigen Chrom-Nickel-Stahls eingeschlossen. Das Laminat dieser drei Schichten bedeckt jedoch ebenfalls nur die der Induktionsquelle zugewandte untere Oberfläche der Wärmeverteilschicht. Dieser bekannte schichtförmige Bodenaufbau wird jedoch bereits in der oben diskutierten, auf die gleiche Anmelderin zurückgehenden DE-OS 36 39 013 als zu teuer in der Herstellung und zu materialaufwendig kritisiert.

In der EP 111 867 wird ebenfalls versucht, das Problem zu großer Verformung durch unterschiedliche Wärmeausdehnungskoeffizienten zu lösen. Dort werden wenigstens zwei dünne Zwischenschichten zwischen einer relativ dicken induktionswärmbaren Schicht und der Wärmeverteilplatte angeordnet, wobei die Außenkante des Bodenaufbaus abgerundet ist, um Beschädigungen durch scharfe Kanten so weit wie möglich zu reduzieren. Trotzdem ist der bekannte Bodenaufbau noch teurer und aufwendiger als derjenige der oben erwähnten DE-OS 36 34 841.

Schließlich zeigt die DE-PS 38 00 745 ein für Induktionsherde geeignetes Kochgeschirr, bei dem auf die übliche Wärmeverteilplatte eine Bodenronde aus zwei Schichten aufgebracht wird, die jedoch nicht als Kapsel ausgebildet ist. Der zweischichtige Aufbau besteht aus einer sich unmittelbar an die Wärmeverteilplatte anschließenden, durch Induktion erwärmenden Schicht aus einer hochnickelhaltigen Legierung und einer außenliegenden Abdeckschicht aus einem Chrom-Nickel-Stahl. Es ist keine Bodenkapsel vorgesehen, die auch die Umfangsflächen der Wärmeverteilplatte bedeckt. Darüber hinaus kann die außenliegende Schicht aus Chrom-Nickel-Stahl nicht als Versteifungsschicht wirken, da Chrom-Nickel-Stahl nicht durch Induktion erwärmbar ist und die Magnetfelder der Induktionsheizung abschirmt. Die Anmelderin der vorliegenden Anmeldung hat festgestellt, daß zum Kochen verwendete Magnetfelder allenfalls eine Eindringtiefe von 0,1 bis 0,3 mm aufweisen. Eine derartig dünne Chrom-Nickel-Stahlschicht, wie sie somit in dieser Druckschrift vorgesehen werden müßte, um die Induktionsankopplung nicht zu stören, kann jedoch andererseits keine Versteifungswirkung entfalten.

Der Erfindung liegt somit die Aufgabe zugrunde, ein wenig empfindliches, für Induktionsherde geeignetes Kochgefäß bereitzustellen, das bei akzeptablem Materialaufwand auch die Normanforderungen für Kochgefäße für Elektrokochplatten erfüllt.

Die Aufgabe wird durch die im Anspruch 1 angegebenen Merkmale gelöst.

Es hat sich herausgestellt, daß die kapselartige Form einer zweischichtigen Abdeckung mit einer innenliegenden, versteifenden Schicht mit einer Dicke von etwa 0,3 - 0,5 mm, wobei sich auch die Schicht aus dem durch Induktion erwärmbaren Material seitlich über den Umfang der Wärmeverteilplatte erstreckt, wo sie eigentlich zur Induktionsankoppelung nicht benötigt würde, der gesamten Konstruktion eine ausreichende Formsteifigkeit auch bei Erwärmung verleiht, so daß ein zweischichtiger Aufbau ausreicht, eine das Toleranzmaß für Kochtöpfe für Elektrokochplatten (DIN 44 904) übersteigende Verformung bei Erwärmung zu verhindern. Die tatsächlich auftretende Verformung bleibt im elastischen Bereich und ist deshalb reversibel. Da die Bodenkapsel nur aus zwei Schichten aufgebaut ist, befindet sich die induktionserwärmbare Schicht direkt benachbart zur Induktionsquelle, so daß ein optimaler Wirkungsgrad erreicht wird.

Zwar sind Abdeckungen in Form von Bodenkapseln aus einschichtigem Chrom-Nickel-Stahlblech bei Kochgefäßen weit verbreitet (s. beispielsweise DE-OS 22 58 795 oder DE-GM 76 27 843), diese Bodenkapseln wurden jedoch bisher nur eingesetzt, um die Wärmeverteilplatte gegen Korrosion zu schützen, um zu verhindern, daß eventuell austretendes Lot nachträglich abgetragen werden muß, oder um einem aus Edelstahl bestehenden Kochgefäß ein einheitliches, attraktives Aussehen zu verleihen.

Vorteilhafte Weiterbildungen der Erfindung sind den Unteransprüchen zu entnehmen.

Wenn gemäß Anspruch 2 die andere Schicht des zweischichtigen Aufbaus der Bodenkapsel beispielsweise aus einem rostbeständigen Chrom-Nickel-Stahl besteht, wird eine besonders vorteilhafte Versteifungswirkung erreicht.

Anspruch 3 beschreibt eine besonders bevorzugte Materialauswahl für die induktionserwärmbare Schicht.

Anspruch 4 beschreibt einen besonders bevorzugten Dickenbereich für die induktionserwärmbare Schicht, die einen Kompromiß zwischen ausreichend großer Dicke für eine optimale Induktionsankoppelung und der Gefahr nicht mehr beherrschbarer Wärmespannungen und der daraus resultierenden Verformung darstellt.

Gemäß Anspruch 5 wird die Bodenkapsel zweckmäßigerweise aus einem plattierten Blech hergestellt, wobei der Plattierungsvorgang eine optimale Haftung zwischen den beiden Schichten der Bodenkapsel gewährleistet.

Die Ansprüche 6 und 7 beschreiben besonders kostengünstige Herstellungsmöglichkeiten der Bodenkapsel.

Zweckmäßigerweise wird die Erfindung gemäß Anspruch 8 für Gefäßkörper aus einem rostbeständigen Chrom-Nickel-Stahl eingesetzt.

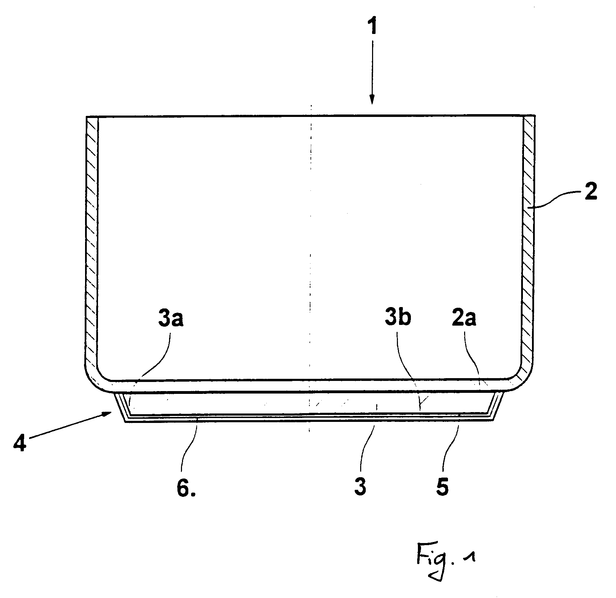

Ein Ausführungsbeispiel der Erfindung wird nachfolgend anhand der einzigen Zeichnung erläutert. die einen schematischen, nicht maßstabsgetreuen Querschnitt durch ein erfindungsgemäßes Kochgefäß zeigt.

Die Zeichnung zeigt ein Kochgefäß 1 in Form eines Kochtopfes, der einen Gefäßkörper 2 aufweist, der in herkömmlicher Weise durch Tiefziehen aus einem Blech aus dem für diese Zwecke üblichen, rostbeständigen, austenitischen Chrom-Nickel-Stahl hergestellt wurde. Der Boden 2a des Gefäßkörpers 2 ist an seiner nach unten weisenden Außenseite mit einer Wärmeverteilplatte 3 wärmeübertragend verbunden. Die Wärmeverteilplatte 3 besteht aus einer für diesen Zweck üblichen Aluminiumronde ausreichender Dicke. Die leicht kegelförmig verlaufende Umfangsfläche 3a und die vom Boden 2a wegweisende Unterseite 3b der Wärmeverteilplatte 3 sind mit einer als Bodenkapsel 4 ausgebildeten Abdeckung bedeckt. Die Bodenkapsel 4 reicht dabei bis zum Gefäßkörper 2.

Die Bodenkapsel 4 ist zweischichtig aufgebaut und enthält eine innenliegende, sich an die Wärmeverteilplatte 3 anschließende Schicht 5 aus einem rostbeständigen, austenitischen Chrom-Nickel-Stahl (insbesondere 1.4301), d.h. dem gleichen Stahl, wie er auch für den Gefäßkörper 2 verwendet wurde. Die außenliegende Schicht 6 der Bodenkapsel 4 besteht aus einem durch Induktion erwärmbaren Material, insbesondere einem Chrom-Stahl (1.4016). In dieser Zusammenstellung wirkt die Schicht 5 als versteifende Schicht, die eine das Toleranzmaß übersteigende Wärmeverformung verhindert.

Das zweischichtige Material der Bodenkapsel 4 besteht aus einem vorplattierten Blech, wobei die Schicht 5 aus Chrom-Nickel-Stahl eine Dicke zwischen etwa 0,3 bis 0,5 mm aufweist. Die Dicke dieser Schicht 5 wird zweckmäßigerweise auf den Durchmesser der Wärmeverteilplatte 3 bzw. der Bodenkapsel 4 abgestimmt, wobei kleinere Durchmesser die geringere Schichtdicke erfordern. Die Schicht 6 aus Chrom-Stahl ist zwischen etwa 0,2 bis etwa 0,3 mm dick. Verringert sich die Dicke, so wird die Ankoppelung an die Induktionsquelle schlechter. Eine dickere Schicht würde keine Vorteile im Wirkungsgrad bringen. Bevorzugt wird eine ursprünglich 0,3 mm dicke Schicht eingesetzt, von der dann bei der Endbearbeitung des Kochgefäßes 1 noch wenige Zehntelmillimeter abgetragen werden können.

Die Kapsel wird beispielsweise aus einer vorplattierten Blechronde tiefgezogen oder durch andere, bekannte Herstellungsverfahren gefertigt und in üblicher Weise mit dem Gefäßkörper 2 unter Einschluß der Wärmeverteilplatte 3 verbunden. So kann beispielsweise der Gefäßkörper 2, die aus einer Aluminiumronde bestehende Wärmeverteilplatte 3 und die Bodenkapsel 4 aus dem zweischichtigen Material durch induktives Löten in einem Arbeitsgang miteinander verbunden werden, wie dies auch bei herkömmlichen Kochgefäßen mit Bodenkapseln aus einem einschichtigen Chrom-Nickel-Stahl üblich ist. Bei Gefäßkörpern aus Chrom-Nickel-Stahl, einer Wärmeverteilplatte aus einem einzigen Material, z.B. Aluminium, und einer Bodenkapsel mit innenliegender Versteifungsschicht aus Chrom-Nickel-Stahl kann das Verlöten aller drei Teile bei der gleichen Temperatur erfolgen, was die Herstellung wesentlich vereinfacht.

Es hat sich herausgestellt, daß die durch die unterschiedlichen Wärmeausdehnungskoeffizienten bedingte Verformung des erfindungsgemäßen Kochgefäßes innerhalb des elastischen Bereichs der Verformung bleibt, und demzufolge reversibel ist. Auch übersteigt selbst diese Verformung nicht die Grenzwerte der DIN 44 904.

In Abwandlung des beschriebenen und gezeichneten Ausführungsbeispiels kann beispielsweise für den Gefäßkörper ein anderes, für Kochgefäße geeignetes Material eingesetzt werden. Auch muß das für die versteifende Schicht der Bodenkapsel eingesetzte Material nicht das gleiche Material wie das Material des Gefäßkörpers sein, wobei gegebenenfalls die Dicken auf die speziellen Materialeigenschaften, insbesondere deren Wärmeausdehnungskoeffizient, abgestimmt werden sollten. Obwohl Chrom-Stahl wegen seiner relativen Rostbeständigkeit für die induktionserwärmbare Schicht bevorzugt ist, können auch andere geeignete Materialien eingesetzt werden.

## Patentansprüche

1. Induktionsherdgeeignetes Kochgefäß (1) mit einem Gefäßkörper (2), einer Wärmeverteilplatte (3) und einer Abdeckung in Form einer zweischichtigen Bodenkapsel (4), die eine durch Induktion erwärmbare Schicht (6) und eine weitere Schicht (5) enthält, **dadurch gekennzeichnet**, daß die weitere Schicht (5) aus einem versteifenden Material mit einer Dicke von etwa 0,3 mm bis etwa 0,5 mm besteht und zwischen der durch Induktion erwärmbaren Schicht (6) und der wärmeverteilplatte (3) angeordnet ist.

2. Kochgefäß nach Anspruch 1, **dadurch gekennzeichnet**, daß die andere Schicht (5) aus einem versteifenden Material aus einem rostbeständigen Chrom-Nickel-Stahl besteht.

3. Kochgefäß nach Anspruch 1 oder 2, **dadurch gekennzeichnet**, daß die durch Induktion erwärmbare Schicht (6) aus einem Chrom-Stahl besteht.

4. Kochgefäß nach einem der Ansprüche 1 bis 3, **dadurch gekennzeichnet**, daß die Dicke der durch Induktion erwärmbaren Schicht (6) etwa 0,2 mm bis etwa 0,3 mm beträgt.

5. Kochgefäß nach einem der Ansprüche 1 bis 4, **dadurch gekennzeichnet**, daß die Bodenkapsel (4) aus einem zweischichtig plattierten Blech besteht.

6. Kochgefäß nach einem der Ansprüche 1 bis 5, **dadurch gekennzeichnet**, daß die Bodenkapsel (4) durch Tiefziehen hergestellt ist.

7. Kochgefäß nach einem der Ansprüche 1 bis 6, **dadurch gekennzeichnet**, daß die Wärmeverteilplatte (3) aus Aluminium besteht.

8. Kochgefäß nach einem der Ansprüche 1 bis 7, **dadurch gekennzeichnet**, daß der Gefäßkörper (2) aus einem rostbeständigen Chrom-Nickel-Stahl besteht.

## Claims

1. Cooking vessel (1) suitable for induction cookers, with a vessel body (2), a heat distributing plate (3) and a cover in the form of a two-layer base capsule (4), which includes a layer (6) heatable by induction and a further layer (5), characterised in that the further layer (5) consists of a stiffening material with a thickness of about 0.3 mm to about 0.5 mm, and is located between the layer (6) heatable by induction and the heat distribution plate (3).

2. Cooking vessel according to claim 1, characterised in that the other layer (5) consists of a stiffening material of a rust-resistant chrome-nickel steel.

3. Cooking vessel according to claim 1 or 2, characterised in that the layer (6) heatable by induction consists of a chrome steel.

4. Cooking vessel according to one of claims 1 to 3, characterised in that the thickness of the layer (6) heatable by induction comes to about 0.2 mm to about 0.3 mm.

5. Cooking vessel according to one of claims 1 to 4, characterised in that the base capsule (4) consists of a two-layer plated sheet metal.

6. Cooking vessel according to one of claims 1 to 5, characterised in that the base capsule (4) is produced by deep drawing.

7. Cooking vessel according to one of claims 1 to 6, characterised in that the heat distribution plate (3) consists of aluminium.

8. Cooking vessel according to one of claims 1 to 7, characterised in that the vessel body (2) consists of a rust-resistant chrome-nickel steel.

## Revendications

1. Ustensile de cuisine (1) adapté aux tables de cuisson à induction comportant un corps d'ustensile (2), une plaque de répartition de chaleur (3) et un revêtement sous la forme d'un enrobage inférieur (4) à deux couches qui comprend une couche (6) pouvant être chauffée par induction et une autre couche (5), **caractérisé** en ce que l'autre couche (5) est en un matériau de renforcement d'une épaisseur comprise entre environ 0,3 et environ 0,5 mm et est disposée entre la couche (6) pouvant être chauffée par induction et la plaque de répartition de chaleur (3).

2. Ustensile de cuisine selon la revendication 1, **caractérisé** en ce que l'autre couche (5) est en un matériau de renforcement constitué par un acier chrome-nickel inoxydable.

3. Ustensile de cuisine selon la revendication 1 ou 2, **caractérisé** en ce que la couche (6) pouvant être chauffée par induction est en un acier chromé.

4. Ustensile de cuisine selon l'une des revendications 1 à 3, **caractérisé** en ce que l'épaisseur de la couche (6) pouvant être chauffée par induction est comprise entre environ 0,2 et environ 0,3 mm.

5. Ustensile de cuisine selon l'une des revendications 1 à 4, **caractérisé** en ce que l'enrobage inférieur (4) est constitué d'une tôle plaquée à deux couches.

6. Ustensile de cuisine selon l'une des revendications 1 à 5, **caractérisé** en ce que l'enrobage inférieur (4) est fabriqué par emboutissage.

7. Ustensile de cuisine selon l'une des revendications 1 à 6, **caractérisé** en ce que la plaque de répartition de chaleur (3) est en aluminium.

8. Ustensile de cuisine selon l'une des revendications 1 à 7, **caractérisé** en ce que le corps d'ustensile (2) est en un acier chrome-nickel inoxydable.
